Europäisches Patentamt

European Patent Office

Office européen des brevets

(19)

(11) Veröffentlichungsnummer : **0 009 219**
**B1**

(12) # EUROPÄISCHE PATENTSCHRIFT

(45) Veröffentlichungstag der Patentschrift :
13.01.82

(51) Int. Cl.³ : **A 23 L   1/164, A 23 C   23/00**

(21) Anmeldenummer : 79103444.0

(22) Anmeldetag : 14.09.79

(54) Trockene chipsartige Nahrungs- oder Genussmittelscheiben und Verfahren zu ihrer Herstellung.

(30) Priorität : 21.09.78 DE 2841067

(43) Veröffentlichungstag der Anmeldung :
02.04.80 (Patentblatt 80/07)

(45) Bekanntmachung des Hinweises auf die Patenterteilung : 13.01.82 Patentblatt 82/02

(84) Benannte Vertragsstaaten :
AT CH DE FR GB IT NL SE

(56) Entgegenhaltungen :
CH - A - 545 593
DE - A1 - 2 527 632
DE - A1 - 2 802 959
GB - A - 1 350 547

(73) Patentinhaber : Munk, Werner Georg
Bergstrasse 12
D-7981 Vogt/Ravensburg (DE)

(72) Erfinder : Munk, Werner Georg
Bergstrasse 12
D-7981 Vogt/Ravensburg (DE)

(74) Vertreter : Patentanwälte RUFF & BEIER
Neckarstrasse 50
D-7000 Stuttgart 1 (DE)

Imprimerie Jouve, 18, rue St-Denis, 75001 Paris, France

EP 0 009 219 B1

Trockene chipsartige Nahrungs- oder Genußmittelscheiben und Verfahren zu ihrer Herstellung

Die Erfindung betrifft trockene chipsartige Nahrungs- oder Genußmittelscheiben, die aufgrund ihrer Form und Konsistenz zum unmittelbaren Mundverzehr geeignet sind und eine Dicke von 1 bis 10 mm besitzen, und Verfahren zu ihrer Herstellung.

Derartige Verzehrformen sind insbesondere in Form von getrockneten Fruchtscheiben und Kartoffelchips bekannt. Es handelt sich hier aber jeweils um solche Fruchtarten, die sich von Natur aus zur Herstellung von chipsartigen Produkten eignen, da die Frucht als solche die zur Herstellung von Chips benötigte Größe und Konsistenz besitzt.

Es ist in der Lebensmitteltechnik auch sonst allgemein üblich, Nahrungs- oder Genußmittel durch Trocknung in einen lagerfähigen Zustand zu versetzen. Die Wahl des Trocknungsverfahrens richtet sich dabei nach den Anforderungen an das Trockengut. Neben dem Wunsch nach möglichst langer Lagerfähigkeit besteht die Forderung nach optimaler Weiterverarbeitbarkeit des Trockengutes. Das Trockengut, das in Form von Pulver, Granulat oder in Stücken anfällt, ist bisher nicht für den direkten Verzehr bestimmt und geeignet, sondern für die Weiterverarbeitung in Küchen, gewerblichen Betrieben oder in der industriellen Fertigung. Ein wesentlicher Vorgang bei dieser Weiterverarbeitung ist die Rekonstitution des Trockengutes, d.h. die Wiederbefeuchtung, wobei die sensorischen Eigenschaften des ursprünglichen Frischproduktes bzw. des vor dem Trockenvorgang zubereiteten Produktes nach Möglichkeit Wiederhergestellt werden sollen. Durch entsprechend schonende Trocknung kann erreicht werden, daß das rekonstituierte Produkte dem ursprünglichen Frischprodukt bzw. zubereiteten Produkt im Geschmack gleich kommt. Es war bisher aber nicht möglich, das Trockenprodukt auch in einer für den unmittelbaren Verzehr angenehmen Form und Konsistenz herzustellen.

Neben diesen durch Trocknung haltbar gemachten Produkten gibt es auch eine Vielzahl von Nahrungsmitteln, die durch einen Trocknungsvorgang bei erhöhter Temperatur, insbesondere einen Backvorgang weitgehend haltbar gemacht worden sind. Solche Produkte sind auch in Form von Scheiben bekannt. Beim Backvorgang handelt es sich jedoch um einen irreversiblen Vorgang, so daß hier eine Rekonstituierung, d.h. eine Wiederherstellung des vor dem Backvorgang herrschenden Zustandes des Nahrungsmittels nicht mehr möglich ist. So ist es aus der britischen Patentschrift 1 350 547 bekannt, Snack-Produkte dadurch herzustellen, daß ein Teig zu einem Strang geformt, gefroren und dann in Scheiben geschnitten wird. Die Scheiben werden dann durch Frittieren in eine verzehrfertige Form überführt. Auch beim Verfahren nach der Schweizer Patentschrift 545 593 werden geschmacksverändernde Verfahrensschritte durchgeführt, da dort zur Stabilisierung der unter Verwendung von Milchkonzentraten erhaltenen Schaumkörper eine irreversible Koagulation der Proteine vorgenommen wird.

Aufgabe der vorliegenden Erfindung ist es deshalb, Nahrungs- oder Genußmittelscheiben aus einer Vielzahl von Grundstoffen zu schaffen, die für den sofortigen Verzehr geeignet sind, bei denen eine Rekonstituierung vor dem Verzehr entbehrlich ist und die im Munde eine Rekonstituierung zum Ausgangsprodukt erlauben.

Diese Aufgabe wird durch trockene chipsartige Nahrungs- oder Genußmittelscheiben gelöst, die dadurch gekennzeichnet sind, daß sie aus einer im wesentlichen homogenen verzehrfertigen rezeptierten Masse von fließfähiger bis plastisch verformbarer Konsistenz auf Basis von Milch bzw. Milchprodukten durch Formen der Masse und anschließendes Gefriertrocknen in offenporiger im Munde rekonstituierbarer Form erhältlich sind.

Die erfindungsgemäßen Chipsprodukte sind aufgrund ihrer äußeren Form, ihrer durch Trocknung erzielten knackig-knusprigen Konsistenz, ihrer porösen Struktur und ihrer geschmacklich fein abgestimmten Zusammensetzung hervorragend für den sofortigen Verzehr geeignet. Dabei findet ihre Rekonstituierung im Munde durch den Speichel statt und zwar in Form eines angenehmen Schmelz- bzw. Lösevorganges.

Durch die Erfindung sind somit die Probleme der Rekonstitution zu naturidentischen oder zu konsistenzmäßig ansprechenden Produkten beseitigt. Eine Weiterverarbeitung der Trockenprodukte vor dem Verzehr kann grundsätzlich entfallen. Die Rekonstitution wird vom Verbraucher selbst beim Verzehr vorgenommen, wobei die Mundspeichelproduktion durch die gezielte physikalische und chemische Zusammensetzung der Nahrungsmittelscheiben ausgelöst wird. Der Mundspeichel führt während der Rekonstitution der Nahrungsmittelscheiben zu einer Veränderung der ursprünglich spröden zu einer weichen, schluckfähigen Konsistenz, die von dem Verbraucher als ein angenehmes Schmelzen mit zunehmendem Geschmackserlebnis empfunden wird. Dabei regen insbesondere die in Wasser löslichen Stoffe der Nahrungsmittelscheiben die Speichelproduktion an, wodurch ein Klebrigwerden oder sich Festsaugen des Produktes im Mund vermieden wird.

Als Grundstoffe für die Grundmasse sind im wesentlichen vorgesehen Pulpen oder Konzentrate auf Basis von Milch und Milcherzeugnissen, wie Joghurt und Quark. Anstelle von Milch bzw. Milcherzeugnissen können auch Grundmassen auf Basis von Obst und Gemüse, Fisch und Fleisch und daraus hergestellten Produkten sowie Halbfertigerzeugnissen zur Herstellung von Lebensmitteln, z.B. Wurstbrät vorgesehen sein. Bestandteile der Grundmasse oder Zusätze hierzu können auch Geschmacks- und Genußstoffe wie Kakao, Kaffee, Vanille u. dgl. sein. In Abhängigkeit von der gewünschten Rezeptur können die jeweiligen Bestandteile für sich alleine oder in Form von Mischungen in der Grundmasse vorliegen.

Die gewünschte Knackigkeit bzw. Knusprigkeit der erfindungsgemäßen Nahrungsmittelscheiben hängt zu einem wesentlichen Anteil vom Trocknungsgrad ab, der in Abhängigkeit von der jeweiligen Zusammensetzung der Grundmasse möglichst tief gehalten wird, in der Regel unter 10 %, vorzugsweise unter 5 % Feuchtigkeitsgehalt. Aber auch die Dicke der Nahrungsmittelscheiben spielt im Hinblick auf die Knackigkeit eine wesentliche Rolle. Bei einer Dicke der Scheiben in der Größe von ca. 1 bis 3 mm sind die Scheiben besonders knusprig, wogegen Scheiben mit einer größeren Dicke im Bereich von ca. 3 bis 8 mm bei der Rekonstituierung im Mund einen etwas weicheren Charakter haben nach Art eines sogenannten Softproduktes. Das Softprodukt enthält im wesentlichen die Gewichtsmenge an Grundmasse pro Flächeneinheit wie das Knusperprodukt, aber wegen zusätzlicher Makroporen bzw. Bläschen eine geringere Dichte und deshalb eine größere Dicke. In der Regel liegt die Dicke der Genußmittelscheiben unter 10 mm, vorzugsweise unter 5 mm. Aus Gründen der Festigkeit wird normalerweise eine Dicke von 1 mm nicht unterschritten.

Die erfindungsgemäßen Nahrungs- oder Genußmittelscheiben werden vorzugsweise dadurch hergestellt, daß eine wässrige Grundmasse auf Basis von Milch bzw. Milchprodukten die in Wasser lösliche wie auch unlösliche Gerüstbildner enthält, ggf. unter Zugabe von Geschmacks- und Würzstoffen, entsprechend einer verzehrbereiten Zusammensetzung zubereitet wird, in eine noch fließfähig dickflüssige bis plastisch verformbare Konsistenz gebracht wird, zu Scheiben mit einer Dicke von 1 bis 10 mm geformt und dann unter Ausbildung eines porösen Trockenproduktes gefriergetrocknet wird. Bei der Gefriertrocknung werden die aus der Grundmasse geformten Scheiben vorzugsweise in einem Wirbelbett tiefgefroren und dann gefriergetrocknet. Durch die Gefriertrocknung wird eine Veränderung des Geschmacks vermieden. Gleichzeitig werden die gewünschten Hohlräume und die poröse Struktur geschaffen.

Die Formung der Grundmasse zu Scheiben kann dadurch erfolgen, daß die Grundmasse in Formen gegossen oder gestrichen wird oder in eine plastisch verformbare Konsistenz gebracht und dann in Scheiben geschnitten wird. Letzteres kann vorgenommen werden, indem die Grundmasse durch Vorfrosten oder durch Zusatz von Verfestigungsmitteln in eine plastisch verformbare und schneidbare Konsistenz gebracht, zu einem im Querschnitt der gewünschten Scheibengröße entsprechenden Strang gepreßt und dann in Scheiben geschnitten wird.

Wesentlich für die erwünschten Verzehreigenschaften der erfindungsgemäßen Nahrungsmittelscheiben ist, daß die Scheiben beim Verzehr den Speichel in gewünschtem Maße aufsaugen und dabei schnell zerfallen. Dies wird durch einen hohen Anteil an in Wasser bzw. Speichel löslichen Stoffen wie Zucker, Mineralsalzen, Fruchtsäuren u. dgl. erzielt, die die Speichelproduktion anregen und zu einem Zerfall der Struktur der Scheiben führen, infolge ihrer Bindemitteleigenschaften aber auch als Gerüstbildner wirken. Aber auch die Porosität des Produktes spielt dabei eine große Rolle, die ein schnelles Durchdringen der Scheiben mit Speichel erlaubt. Bei der Gefriertrocknung entsteht diese Porosität bei der Entfernung der Eiskristalle aus der vorgefrorenen Grundmasse. Aber auch durch ein Aufschlagen bzw. Aufschäumen der Grundmasse vor dem Trocknungsvorgang kann die Porenbildung unterstützt werden, insbesondere bei der Herstellung eines Softproduktes. Weiterhin tragen die in Wasser unlöslichen Stoffe, insbesondere Gerüst- und Faserstoffe von pflanzlichen und tierischen Produkten zur Bildung der porösen Struktur der Nahrungsmittelscheiben bei, da sie ein Zusammenfallen bzw. Zusammenbacken der Grundmasse bei der Gefriertrocknung verhindern. Deshalb hat die fertig getrocknete Nahrungsmittelscheibe im wesentlichen die gleiche Dicke und Größe wie die vorgeformte Scheibe bzw. Platte aus der noch feuchten Grundmasse. Der Durchmesser der Scheiben beträgt in der Regel 20 bis 60 mm, so daß sie auf einmal in den Mund geschoben werden können. Es sind aber auch größere und kleinere Formen möglich, sowie von der Kreisform abweichende flache Körper, wie Platten, Streifen u. dgl.

Die Wassermenge in der Grundmasse richtet sich einerseits nach der gewünschten Konsistenz bzw. Viskosität, die die Grundmasse vor der Trocknung haben soll. Zum anderen ist aber ein hoher Wassergehalt in der Regel zur Bildung eines großen Porenvolumens erwünscht. Deshalb liegt der Wassergehalt in der Grundmasse vor der Trocknung in der Regel bei mindestens 50 %, vorzugweise bei ca. 60 bis 90 %. Er kann sogar über 90 % liegen.

Wie oben bereits erwähnt, kann die Grundmasse auf einer Vielzahl von Nahrungsmittelgrundstoffen aufgebaut sein. Besonders bevorzugt ist jedoch eine Grundmasse auf Basis von Milch bzw. Milchprodukten, da diese ein ernährungswissenschaftlich wertvolles und eiweißhaltiges Ausgangsmaterial darstellen, das leicht erhältlich ist. Auch können Grundmassen auf der Basis von Milchprodukten durch Zugabe von verschiedenartigsten Zusätzen, wie Früchte, Gemüse, Kräuter, Fleisch u. dgl. die verschiedenartigsten Geschmacksrichtungen verliehen werden. Weiterhin kann das erfindungsgemäße Verfahren auch mit Erfolg durchgeführt werden, wenn anstelle von Milch bzw. Milchprodukten Obst, Gemüse, Fisch und/oder Fleisch als Basis für die verzehrbereit rezeptierte Grundmasse verwendet werden.

Im nachfolgenden wird das erfindungsgemäße Verfahren zur Herstellung der Nahrungs- bzw. Genußmittelscheiben näher beschrieben, wobei diese Beschreibung nicht beschränkend sein soll.

Aus einzelnen Lebensmittelrohstoffen der oben genannten Art oder aus Mischungen hiervon wird eine homogene Grundmasse hergestellt. Wenn notwendig, werden zur geschmacklichen Abwandlung oder zur Regulierung der Mundspeichelproduktion Lebensmittel oder Zusatzstoffe, wie tierische oder pflanzliche Fette, Eiweiß, Stärke, Gelatine und andere Hydrokoloide, sowie Zucker, Genußsäuren, Salz, Gewürze oder Aromen zugegeben, wobei sich die Art und Anzahl der Zugabestoffe im wesentlichen nach der gewünschten Rezeptur des Nahrungs-bzw. Genußmittels richtet. Wesentlich ist dabei, daß die Grundmasse einen später die Speichelproduktion anregenden hohen Gehalt an löslichen Stoffen enthält.

Zur Verbesserung der Konsistenz, sowohl für die Verarbeitung der Grundmasse als auch für den Endzustand, insbesondere die Porosität der Nahrungsmittelscheiben, können Emulgatoren, Verdickungsmittel, Stabilisatoren und/oder Aufschlagmittel zugegeben werden. Geschmack und Aussehen der getrockneten Nahrungsmittelscheiben können auch dadurch verbessert werden, daß einzelne Komponenten der Grundmasse, insbesondere Früchte, kleinstückig zugefügt werden.

Die Wahl der einzelnen Zusatzstoffe zur Grundmasse hängt aber nicht nur von der jeweils gewünschten Geschmacksrichtung, sondern auch von der gewünschten Festigkeit und Struktur der Nahrungsmittelscheiben ab. Dabei werden Art und Menge der Bestandteile so aufeinander abgestimmt, daß die Scheiben beim Verzehr erst dann verfallen, wenn sie eine entsprechende Menge Speichel aufgesaugt haben. Dies kann insbesondere durch Steuerung der Porosität und durch Variierung des Gehalts an löslichen und quellbaren Stoffen erreicht werden. So sind bei Nahrungsmittelscheiben auf Basis von Milch und Milchprodukten Zusätze aus löslichen Stoffen wie Zucker und Verdickungs- bzw. Quellungsmittel wie modifizierte Stärke bevorzugt, um die gewünschte Festigkeit zu erhalten. Dabei kann die Porosität durch das Verhältnis von löslichen zu unlöslichen Bestandteilen variiert werden. Wird der Grundmasse vor der Trocknung eine Schaumstruktur verliehen, dann kommt zu der feinen Offenporigkeit noch eine grobe Porosität aufgrund der Schaumbildung. Es können sich somit im Produkt sichtbare Hohlräume bilden, die durch Mikroporen miteinander verbunden sind.

Weitere Vorbereitungsschritte der Grundmasse vor der Trocknung können eine Thermisierung, z.B. zum Zwecke der Keimfreimachung, eine Konzentrierung, eine Homogenisierung, eine Bebrütung bzw. Fermentierung und/oder eine Reifung sein, je nachdem, um welche Rohstoffe und um welche Endprodukte es sich handelt. Da es die Gefriertrocknung ermöglicht, Bestandteile der Grundmasse in ihrem nativen Zustand aufrechtzuerhalten, wird der durch eine Bebrütung bzw. Fermentierung mit physiologisch erwünschten Bakterien, wie Joghurtbakterien, erzielte Gehalt an Fermenten und Vitaminen durch die anschließende Trocknung und die Aufrechterhaltung des trockenen Zustandes beim Fertigprodukt nicht beeinträchtigt. Nach der Herstellung der Grundmasse kann eine Vorfrostung der Grundmasse erfolgen, für die ein in der Eiskrem- oder Süßwarenindustrie übliches Aufschlagegerät verwendet werden kann. Während der Vorfrostung wird die Grundmasse vorzugsweise stark bewegt, wobei sie, falls dies erwünscht ist, zur Erhöhung der Porosität während des Kühlvorganges mit Luft oder Stickstoff aufgeschlagen werden kann. Auf der anderen Seite kann eine gewünschte Porosität aber auch durch eine Gärung der Grundmasse, die mit einer Gasbildung verbunden ist, erzeugt werden.

Während der Gefriertrocknung erfolgt der Wasserentzug unter Beibehaltung der äußeren Form der Nahrungsmittelscheiben. Dabei erhalten die Scheiben je nach Vorbehandlung der Grundmasse die vorbestimmte Porosität und Konsistenz, die für den unmittelbaren Mundverzehr am geeignetsten erscheint. Nach der Trocknung werden die Nahrungsmittelscheiben verpackt, wobei die Verpackung bei empfindlichen und hygroskopischen Produkten vorzugsweise wasserdampfdicht ist. Auch eine Verpackung unter Schutzgasatmosphäre kommt infrage.

Durch die Erfindung können zahlreiche Grundnahrungsmittel und -mischungen in geeigneter Auswahl in eine zeitnahe Verzehrform gebracht werden, ohne daß man auf den ernährungsphysiologischen Wert dieser Nahrungsmittel verzichten muß. Dabei besitzen die erfindungsgemäßen Nahrungsmittelscheiben eine lange Haltbarkeit, in vielen Fällen sogar im Sinne einer Vollkonserve. So ist es möglich, das Grundnahrungsmittel Milch in eine knackig, knusprige Form zu bringen, ohne daß der Ernährungswert wesentliche Einbußen erleidet. Dabei brauchen keine Konservierungsmittel oder unerwünschte Zusätze eingesetzt werden. In der Form solcher Milchchips kann Milch auch als Schulspeise wieder größere Bedeutung erhalten.

Mit Hilfe des erfindungsgemäßen Verfahrens können auch kombinierte Eiweißstrukturen aus pflanzlichen oder tierischen Produkten als Nahrungsmittelscheiben hergestellt werden, um beispielsweise der Gereatrie eine Seniorenkost mit hohem Eiweißwert mundgerecht und leicht verzehrbar zur Verfügung zu stellen. Schließlich läßt sich eine knackig-knusprige Nahrungsmittelscheibe aus gekochtem Fleisch leichter verzehren als das gekochte Fleisch selbst, vor allem bei älteren Menschen, bei denen der Kauvorgang problematisch ist.

Es ist auch möglich, Not- oder Unterwegsverpflegungen mit der dem jeweiligen Verwendungszweck angepaßten Zusammensetzung herzustellen. Besonders vorteilhaft sind dabei die lange Lagerfähigkeit, der leichte Transport und der angenehme Verzehr ohne jede Zubereitungsmaßnahme.

Statt des Strangpressens kann die Formgebung der Grundmasse vor dem Trocknen auch durch andere an sich bekannte Verfahren, z.B. durch Erstarren in Formen entsprechenden Querschnitts, der von der Kreisform auch abweichen kann, vorgenommen werden. Wesentlich ist dabei lediglich, daß die Scheiben mit ausreichend dünner Schicht geformt werden, damit die Rekonstituierbarkeit im Munde möglich bleibt. Da beim erfindungsgemäßen Verfahren von einer breiartigen Grundmasse ausgegangen wird, entsteht bei der Rekonstituierung im Mund wieder eine breiige Substanz, die infolge der Speichelbildung im Munde nach Art eines Schmelzvorganges zerfließt. Weitere Einzelheiten und Vorteile der Erfindung ergeben sich aus der folgenden Beschreibung von Beispielen, wobei die Rezepturen und

**0 009 219**

die gewählten Verarbeitungsverfahren jeweils austauschbar sind.

Beispiel 1

Milchchips mittels Strangformung

Die Grundmasse besitzt folgende Rezeptur:

| | |
|---|---:|
| Vollmilchkonzentrat ca. 24 % TS | 83 % |
| Saccharose | 9 % |
| Glucosesirup ca. 65 % TS | 6 % |
| Aufschlag- und Dickungsmittel | 1,5 % |
| Aromen | 0,5 % |
| | 100 % |

Pasteurisierte Vollmilch wird gemäß Angabe bis auf 24 % TS (Trockensubstanz) eingedampft, mit den rezepturmäßigen Zusätzen versehen, gemischt, thermisiert und gekühlt. Alternativ zur Eindampfung kann die Grundmasse auch durch Verwendung von pasteurisierter Vollmilch und Zugabe von Rahm und Milchpulver hergestellt werden.

Die so entstandene Grundmasse, die einen Wassergehalt von ca. 66 % besitzt, wird über einen Freezer (übliches Gerät für die Speiseeisherstellung) unter Rühren auf den Temperaturbereich von − 3 bis − 10 °C heruntergekühlt und durch Luftzuführung mit einem Aufschlag von 100 bis 150 % versehen.

Die tiefgekühlte, aufgeschlagene und noch fließfähige Grundmasse wird zu einem Extruder gefördert. Die Grundmasse verläßt den Extruder als schneidfähigen Strang. Mittels einer Schneidvorrichtung wird der Strang in Scheiben geschnitten. Durch die Extruderaustrittsöffnung und durch die Scheibendicke ist die Form der Nahrungsmittelscheibe exakt bestimmt (40 bis 50 mm Durchmesser, 4 bis 5 mm dick).

Die Scheiben fallen unmittelbar nach dem Schneidevorgang auf ein Förderband. Auf dem Förderband gelangen die Scheiben in die Tiefkühlkammer, wo sie auf Temperaturen von − 15 bis − 30 °C eingefroren werden. Am Ende der Tiefkühlkammer werden die Scheiben vom Band entfernt und gelangen als schüttfähige Ware entweder direkt in die Trocknung oder in Behälter zur Zwischenlagerung bei Tiefkühltemperaturen.

Durch die Gefriertrocknung erhalten die Nahrungsmittelscheiben eine poröse, knackige bis softige Konsistenz, die unmittelbar beim Verzehr die angenehmen sensorischen Eigenschaften vermitteln.

Die getrockneten Nahrungsmittelscheiben sind hygroskopisch und werden je nach gewünschter Haltbarkeitsdauer mehr oder weniger wasserdampfdicht verpackt.

Beispiel 2

Fruchtjoghurtchips mittels Fließformung

Die Grundmasse besitzt folgende Rezeptur:

| | |
|---|---:|
| Vollmilchkonzentrat ca. 16 % TS | 63 % |
| Saccharose | 5 % |
| Modifizierte Stärke als Dickungsmittel | 2 % |
| Fruchtzubereitung ca. 48 % TS | 25 % |
| Joghurtkultur | 5 % |
| | 100 % |

Pasteurisierte Vollmilch wird gemäß Angabe eingedampft und mit den rezepturmäßigen Zusätzen außer Fruchtzubereitung und Kultur versehen. Nach einer weiteren Thermisierung (Pasteurisierung) erfolgt unter Zugabe der Kultur die Bebrütung des Milchkonzentrates zur Bildung eines Joghurts, anschließend die Kühlung und Zugabe der keimfreien Fruchtzubereitung.

Die so entstandene, noch fließfähige Grundmasse wird mittels einer Dosiervorrichtung auf ein Förderband getropft bzw. diskontinuierlich aufgespritzt, wonach sie sich scheibenförmig ausbreitet. Durch das Dosierorgan und durch die Dosiermenge ist in Abhängigkeit von der Konsistenz der Grundmasse die Form der Nahrungsmittelscheibe exakt bestimmt (40 bis 50 mm Durchmesser, 2 bis 3 mm dick).

Das Förderband durchläuft einen Tiefkühltunnel in dem die Scheiben eine Temperatur von − 15 bis − 30 °C annehmen. Der weitere Verlauf siehe Beispiel 1. Die getrockneten Frucht-Joghurt-Scheiben stellen ein natives Produkt dar, das lebende Joghurtbakterien enthält. Die fertigen Chips hatten eine Dichte von ca. 0,6 bis 0,7 g/cm$^3$.

5

## 0 009 219

### Beispiel 3

### Kleiechips mittels Gefrierformung

Die Grundmasse besitzt folgende Rezeptur:

| | |
|---|---:|
| Vollmilchkonzentrat ca. 16 % TS | 77 % |
| Saccharose | 3 % |
| Dextrose | 3 % |
| Modifizierte Stärke als Dickungsmittel | 2 % |
| Muesli-Kleie-Mischung | 10 % |
| Joghurtkultur | 5 % |
| | 100 % |

Herstellung der Grundmasse wie in Beispiel 2. Die Grundmasse wird einer Scherbeneismaschine zugeführt. Je nach Konstruktion werden speziell gestaltete Formen mit der Grundmasse gefüllt und tiefgefroren. Die tiefgefrorene Grundmasse in Form von Nahrungsmittelplatten wird aus den Formen entfernt und als schüttfähige Ware direkt der Trocknung zugeführt oder in Tiefkühlräumen zwischengelagert.

Wie die Beispiele zeigen, ist es durch die Erfindung insbesondere möglich, Chips auf Milchbasis zu fertigen, so daß hierdurch die Milch einem neuen Verwendungszweck zugeführt werden kann. Da Milch selbst nicht genügend Gerüstsubstanzen enthält, werden ihr noch ausreichende Mengen an Gerüstsubstanzen, insbesondere Zuckern bzw. Mono- und Disachariden zugesetzt und ebenso Quellungs- bzw. Dickungsmittel. Dabei kann die Menge dieser Zusätze stark variieren. In der Regel werden der Grundmasse etwa 4 bis 20 Gew.-%, vorzugsweise 6 bis 12 Gew.-% Zucker, wie Dextrose, Saccharose und Lactose und 0 bis 3 Gew.-%, vorzugsweise 0,1 bis 2 Gew.-% Dickungsmittel zugegeben. Das Trockenprodukt kann bis zu 60 Gew-% und mehr an Zuckern enthalten einschließlich der Lactose aus der Milch. Der Zuckergehalt liegt vorzugsweise bei ca. 20 bis 40 Gew.-%. Der Gehalt an Dickungsmittel im Trockenprodukt kann bis zu 10 Gew.-% betragen und liegt in der Regel bei 0,3 bis 6 Gew.-%, wobei der Gehalt von der Dickungskraft des Dickungsmittels abhängt. Bei Verwendung von modifizierter Stärke, die eine verhältnismäßig geringe Dickungskraft besitzt, liegt die Menge im mittleren bis oberen Bereich, wogegen sie bei Dickungsmitteln mit hoher Dickungskraft entsprechend niedriger gehalten wird.

Überraschenderweise hat sich gezeigt, daß das Milchfett in den Chips auch bei längerer Lagerung nicht schlecht wird. Vermutlich ist das Fett von den Gerüstsubstanzen eingeschlossen. Es ist daher möglich, auch mit einem höheren Fettanteil zu arbeiten, d.h. zusätzlich noch andere Fette, insbesondere Pflanzenfette zuzugeben.

### Ansprüche

1. Trockene chipsartige Nahrungs- oder Genußmittelscheiben, die aufgrund ihrer Form und Konsistenz zum unmittelbaren Mundverzehr geeignet sind, und eine Dicke von 1 bis 10 mm besitzen, dadurch gekennzeichnet, daß sie aus einer im wesentlichen homogenen verzehrfertig rezeptierten Masse von fließfähiger bis plastisch verformbarer Konsistenz auf Basis von Milch bzw. Milchprodukten durch Formen der Masse und anschließendes Gefriertrocknen in offenporiger im Munde rekonstituierbarer Form erhältlich sind.

2. Nahrungs- oder Genußmittelscheiben nach Anspruch 1, dadurch gekennzeichnet, daß sie als knackiges Produkt eine Dicke von 1 bis 3 mm und als Softprodukt bei entsprechend niedrigerer Dichte eine Dicke von 3 bis 8 mm besitzen.

3. Nahrungs- oder Genußmittelscheiben nach Anspruch 1 oder 2, dadurch gekennzeichnet, daß in der verzehrfertig rezeptierten Masse die Milch bzw. Milchprodukte mit anderen Nahrungsmittelgrundstoffen vermischt sind.

4. Verfahren zur Herstellung der Nahrungs- oder Genußmittelscheiben nach einem der Ansprüche 1 bis 3, dadurch gekennzeichnet, daß eine wässrige Grundmasse auf Basis von Milch bzw. Milchprodukten die in Wasser lösliche wie auch unlösliche Gerüstbildner enthält, ggf. unter Zugabe von Geschmacks- und Würzstoffen, entsprechend einer verzehrbereiten Zusammensetzung zubereitet wird, in eine noch fließfähig dickflüssige bis plastisch verformbare Konsistenz gebracht wird, zu Scheiben mit einer Dicke von 1 bis 10 mm geformt und dann unter Ausbildung eines porösen Trockenproduktes gefriergetrocknet wird.

5. Verfahren nach Anspruch 4, dadurch gekennzeichnet, daß die Grundmasse durch Vorfrosten oder Zusatz von Verfestigungsmitteln in eine plastisch verformbare und schneidbare Konsistenz gebracht, zu einem im Querschnitt der gewünschten Scheibengröße entsprechenden Strang gepreßt, in Scheiben geschnitten und dann gefriergetrocknet wird.

6. Verfahren nach Anspruch 4, dadurch gekennzeichnet, daß die Grundmasse in fließfähigem Zustand in Formen der gewünschten Größe eingebracht und dann gefriergetrocknet wird.

7. Verfahren nach einem der Ansprüche 4 bis 6, dadurch gekennzeichnet, daß die Grundmasse vor dem Trocknen, vorzugsweise vor dem Formen in eine Schaumstruktur überführt wird.

8. Verfahren nach einem der Ansprüche 4 bis 7, dadurch gekennzeichnet, daß die Grundmasse mit physiologisch erwünschten Bakterienkulturen versetzt und bebrütet wird und daß die Trocknungsbedingungen so gewählt werden, daß die Bakterienkulturen lebensfähig bleiben.

9. Verfahren nach einem der Ansprüche 4 bis 8, dadurch gekennzeichnet, daß eine Grundmasse verwendet wird, die vor der Trocknung einen Wassergehalt von über 50 %, insbesondere 60 bis 90 % besitzt.

10. Verfahren nach einem der Ansprüche 4 bis 9, dadurch gekennzeichnet, daß eine Grundmasse auf Basis von Milch bzw. Milchprodukten verwendet wird, die mit anderen Nahrungsmittelgrundstoffen vermischt ist.

11. Verwendung der Verfahrensschritte der Verfahren nach einem der Ansprüche 4 bis 10 zur Herstellung von Nahrungs- und Genußmittelscheiben auf Basis anderer Nahrungsmittel, indem anstelle von Milch und Milchprodukten Obst, Gemüse, Fisch und/oder Fleisch eingesetzt werden.

## Claims

1. Dry chip-like slices of food or luxury food which, as a result of their shape and consistency are suitable for immediate consumption and have a thickness of 1 to 10 mm, characterized in that they are obtainable from a substantially homogeneously formulated substance which is ready to consume, has a flowable to plastically deformable consistency and is based on milk or milk products, by moulding the substance and subsequent freeze-drying in a porous form which can be reconstituted in the mouth.

2. Food or luxury food slices according to claim 1, characterized in that as a crunchy product they have a thickness of 1 to 3 mm and as a soft product with a correspondingly lower density a thickness of 3 to 8 mm.

3. Food or luxury food slices according to claims 1 or 2, characterized in that in the substance formulated so as to be ready to consume the milk or milk products are mixed with other basic food products.

4. Process for producing food or luxury food slices according to one of the claims 1 to 3, characterized in that an aqueous basic substance based on milk or milk products containing watersoluble and water-insoluble builder substances, optionally accompanied by the addition of flavouring agents and spices, is prepared so as to give a composition which is ready to be consumed, after which it is brought into a flowable viscous to plastically deformable consistency, shaped into slices with a thickness of 1 to 10 mm and then freeze-dried accompanied by the formation of a porous dried product.

5. Process according to claim 4, characterized in that the basic substance is brought into a plastically deformable and cutable consistency by prefreezing or adding hardening agents, is extruded to give a strand whose cross-section corresponds to the desired slice size, is cut into slices and then freeze-dried.

6. Process according to claim 4, characterized in that the basic substance is brought in flowable condition in moulds of the desired size and is then freeze-dried.

7. Process according to one of the claims 4 to 6, characterized in that prior to drying the basic substance is given a foam structure, preferably prior to moulding.

8. Process according to one of the claims 4 to 7, characterized in that the basic substance is mixed and incubated with physiologically desired bacterial cultures and that the drying conditions are chosen in such a way that the bacterial cultures remain live.

9. Process according to one of the claims 4 to 8, characterized in that a basic substance is used which, prior to drying has a water content of over 50 % and in particular 60 to 90 %.

10. Process according to one of the claims 4 to 9, characterized in that a basic substance based on milk or milk products is used, which is mixed with other basic food substances.

11. Use of the process stages of the process according to one of the claims 4 to 10, for producing food and luxury food slices based on other foods in that the milk and milk products are replaced by fruit, vegetables, fish and/or meat.

## Revendications

1. Tranches sèches de produits alimentaires ou de délicatesses en forme de chips qui, en raison de leur forme et de leur consistance, conviennent pour être mangées directement, et possèdent une épaisseur de 1 à 10 mm, caractérisées en ce qu'elles peuvent être obtenues sous une forme à pores ouverts reconstituable dans la bouche, à partir d'une masse sensiblement homogène dont la recette la rend prête à consommer, de consistance allant de fluide à déformable plastiquement, à base de lait ou respectivement de produits laitiers, par mise en forme de la masse puis lyophilisation.

2. Tranches de produits alimentaires ou de délicatesses selon la revendication 1, caractérisées en ce qu'elles possèdent une épaisseur de 1 à 3 mm en tant que produit craquant, et une épaisseur de 3 à 8 mm en tant que produit mou, avec une densité plus faible correspondante.

3. Tranches de produits alimentaires ou de délicatesses selon l'une des revendications 1 ou 2, caractérisées en ce que dans la masse dont la recette la rend prête à consommer, le lait ou respectivement les produits laitiers sont mélangés avec d'autres matières alimentaires.

4. Procédé pour fabriquer les tranches de produits alimentaires ou de délicatesses selon l'une des revendications 1 à 3, caractérisé en ce qu'une masse de base aqueuse à base de lait ou respectivement de produits laitiers, qui contient des agents de texture aussi bien solubles qu'insolubles dans l'eau, est préparée suivant une composition prête à être consommée, éventuellement avec addition d'agents de sapidité et de condiments, est amenée à une consistance allant de visqueuse encore fluide à déformable plastiquement, mise sous la forme de tranches possédant une épaisseur de 1 à 10 mm, puis lyophilisée en formant un produit sec poreux.

5. Procédé selon la revendication 4, caractérisé en ce que la masse de base est amenée à une consistance déformable plastiquement et permettant de la couper par pré-réfrigération ou addition d'agents durcisseurs, est pressée pour former un cordon dont la section transversale correspond à la grosseur souhaitée des tranches, découpée en tranches, puis lyophilisée.

6. Procédé selon la revendication 4, caractérisé en ce que la masse de base est introduite dans l'état fluide dans des moules de grandeur souhaitée, puis lyophilisée.

7. Procédé selon l'une quelconque des revendications 4 à 6, caractérisé en ce que la masse de base est transformée en une structure poreuse avant la lyophilisation, de préférence avant la mise en forme.

8. Procédé selon l'une quelconque des revendications 4 à 7, caractérisé en ce que la masse de base est mélangée avec des cultures bactériennes désirées physiologiquement et est laissée incuber, et que les conditions de lyophilisation sont choisies de manière que les cultures bactériennes conservent leur vitalité.

9. Procédé selon l'une quelconque des revendications 4 à 8, caractérisé en ce qu'on utilise une masse de base qui, avant la lyophilisation présente une teneur en eau supérieure à 50 %, notamment de 60 à 90 %.

10. Procédé selon l'une quelconque des revendications 4 à 9, caractérisé en ce qu'on utilise une masse de base à base de lait ou respectivement de produits laitiers, qui est mélangée avec d'autres matières alimentaires.

11. Utilisation des phases opératoires du procédé selon l'une quelconque des revendications 4 à 10 pour la fabrication de tranches de produits alimentaires ou de délicatesses à base d'autres aliments, en utilisant à la place de lait et de produits laitiers, des fruits, des légumes, du poisson et/ou de la viande.